# EUROPEAN PATENT APPLICATION

(11) **EP 4 793 069 A1**
(43) Date of publication of application: **19.08.2026**
(21) Application number: 25210518.4
(22) Date of filing: 22.10.2025
(51) Int. Cl.: B60C 99/00

(54) **TIRE DESIGN METHOD FOR ENHANCING TIRE CENTER REGION RESPONSIVENESS VIA OPTIMIZED TIRE SIDEWALL THICKNESS**

(30) Priority: 18.02.2025 CN 202510175744
(71) Applicant: Shandong Linglong Tire Co., Ltd., Yantai, Shandong 265400 (CN)
(72) Inventor: WANG, Feng, Yantai, 265400 (CN); WANG, Kaili, Yantai, 265400 (CN); MAO, Dongliang, Yantai, 265400 (CN); ZHANG, Min, Yantai, 265400 (CN); WANG, Qian, Yantai, 265400 (CN); ZHOU, Yuan, Yantai, 265400 (CN); ZHANG, Yajun, Yantai, 265400 (CN); WEI, Jianfeng, Yantai, 265400 (CN); ZHU, Shibin, Yantai, 265400 (CN); LIU, Jinglin, Yantai, 265400 (CN)
(74) Representative: Metida

(57) **Abstract**

A tire design method for enhancing tire center region responsiveness via optimized tire sidewall thickness is provided, and belongs to the technical field of vehicle tires. The method includes: S101, obtaining tire sidewall force data and tire center response data of a target vehicle tire, and obtaining vehicle information and historical driving information of a target vehicle; S102, determining a vehicle driving feature vector of the target vehicle and determining a tire sidewall reference thickness matrix of the target vehicle tire; S103, determining a tire sidewall optimized thickness matrix of the target vehicle tire based on the tire sidewall force data, the tire center response data, the vehicle driving feature vector and the tire sidewall reference thickness matrix; and S104, determining a tire design scheme based on the tire sidewall optimized thickness matrix of the target vehicle tire.

## Description

### TECHNICAL FIELD

The disclosure relates to the technical field of vehicle tires, and in particular to a tire design method for enhancing tire center region responsiveness via optimized tire sidewall thickness.

### BACKGROUND

Traditional tire design methods are mainly based on experimental data and adopt tire sidewall structure design with fixed thickness distribution, which usually may not fully consider the complex relationship among driving characteristics, service environment and tire performance of the vehicle. Especially in high-performance vehicles or special working conditions (such as high load and complex road conditions), the influence of the design of tire sidewall region thickness on the tire central region response (such as stiffness, deformation and stability) is often ignored or simplified, which leads to the deviation between tire performance and actual demand.

In recent years, with the development of computer simulation technology and big data analysis, tire performance optimization method has gradually turned to comprehensive analysis based on multidimensional data. Through the in-depth study of tire sidewall force, vehicle characteristics and historical driving data, the influence mechanism of tire sidewall thickness on the tire central region response may be further revealed. However, the existing optimization methods are mostly single optimization, without dynamic adjustment and closed-loop feedback mechanism, and it is difficult to fully meet the diversified requirements of tire performance in complex use scenarios.

Accordingly, a tire design method for enhancing tire center region responsiveness via optimized tire sidewall thickness is provided.

### SUMMARY

A tire design method for enhancing tire center region responsiveness via optimized tire sidewall thickness is provided. By determining the vehicle driving feature vector and the tire sidewall reference thickness matrix of the target vehicle, the tire sidewall force data, the tire center response data, the vehicle driving feature vector and the tire sidewall reference thickness matrix are analyzed to determine the tire sidewall optimized thickness matrix of the target vehicle tire and determine the tire design scheme. The structure and performance of the tire are optimized, the durability and safety of the tire are improved, the fine tire thickness adjustment is realized, the matching degree and dynamic performance of the tire and the vehicle are improved, and the adaptability, quality consistency and use security of the tire are improved.

A tire design method for enhancing tire center region responsiveness via optimized tire sidewall thickness is provided, and includes:
S101, obtaining tire sidewall force data and tire center response data of a target vehicle tire, and obtaining vehicle information and historical driving information of a target vehicle;
S102, determining a vehicle driving feature vector of the target vehicle and determining a tire sidewall reference thickness matrix of the target vehicle tire;
S103, determining a tire sidewall optimized thickness matrix of the target vehicle tire based on the tire sidewall force data, the tire center response data, the vehicle driving feature vector and the tire sidewall reference thickness matrix; and
S104, determining a tire design scheme based on the tire sidewall optimized thickness matrix of the target vehicle tire.

According to the tire design method for enhancing tire center region responsiveness via optimized tire sidewall thickness, obtaining tire sidewall force data and tire center response data of a target vehicle tire, and obtaining vehicle information and historical driving information of a target vehicle includes:
obtaining the vehicle information of the target vehicle, where the vehicle information includes vehicle type and vehicle purpose;
obtaining historical driving information of the target vehicle, where the historical driving information includes historical road surface information and historical driving demand;
dividing the target vehicle tire into regions and determining a first region of the target vehicle tire, where the first region includes a plurality of sub-regions;
obtaining tire sidewall force sub-data and tire center response sub-data of each of the sub-regions in the first region; and
determining the tire sidewall stress data based on tire sidewall stress sub-data of all of the sub-regions in the first region, and determining the tire center response data based on tire center response sub-data of all of the sub-regions in the first region.

According to the tire design method for enhancing tire center region responsiveness via optimized tire sidewall thickness, determining a vehicle driving feature vector of the target vehicle includes:
performing feature extraction on the vehicle information to determine a vehicle feature vector, and performing feature extraction on the historical driving demand to determine a driving feature vector; and
determining the vehicle driving feature vector of the target vehicle based on the vehicle feature vector and the driving feature vector.

According to the tire design method for enhancing tire center region responsiveness via optimized tire sidewall thickness, determining a tire sidewall reference thickness matrix of the target vehicle tire includes:
obtaining vehicle tire sidewall thickness information of a plurality of production batches of the target vehicle, where the vehicle tire sidewall thickness information includes vehicle tire sidewall thickness sub-information of each of the production batches;
determining a tire sidewall reference thickness of each of the sub-regions in the first region based on the first region and the vehicle tire sidewall thickness information; and
determining the sidewall reference thickness matrix of the target vehicle tire based on all of the sub-regions in the first region and sidewall reference thicknesses of all of the sub-regions.

According to the tire design method for enhancing tire center region responsiveness via optimized tire sidewall thickness, determining a tire sidewall optimized thickness matrix of the target vehicle tire based on the tire sidewall force data, the tire center response data, the vehicle driving feature vector and the tire sidewall reference thickness matrix includes:
determining a regional force vector of corresponding to each of the sub-regions in the first region base on each of tire sidewall force sub-data in the tire sidewall force data;
determining a sub-center response vector of corresponding to each of the sub-regions in the first region base on each of tire center response sub-data in the tire center response data, and determining a central response vector of the first region base on all the tire center response sub-data in the tire center response data;
inputting regional force vectors, sub-center response vectors of all the sub-regions in the first region and the central response vector of the first region into a tire sidewall force-central region response correlation model, and determining a sub-region correlation sequence and an influence value of each of the sub-regions in the first region on central region response based on output results of the tire sidewall force-central region response correlation model;
inputting the vehicle driving feature vector, the sub-center response vectors of all the sub-regions in the first region and the central response vector of the first region into a vehicle driving-central region response correlation model, and determining a driving feature correlation sequence and an influence value of each of features in the vehicle driving feature vector on the central region response based on the vehicle driving-central region response correlation model;
determining a thickness adjustment value of each of the sub-regions in the tire sidewall reference thickness matrix based on the sub-region correlation sequence, the influence value of each of the sub-regions in the first region on central region response, the driving feature correlation sequence and the influence value of each of features in the vehicle driving feature vector on the central region response; and
determining the tire sidewall optimized thickness matrix based on thickness adjustment values of all the sub-regions in the first region and the tire sidewall reference thickness matrix.

According to the tire design method for enhancing tire center region responsiveness via optimized tire sidewall thickness, determining a thickness adjustment value of each of the sub-regions in the tire sidewall reference thickness matrix based on the sub-region correlation sequence, the influence value of each of the sub-regions in the first region on central region response, the driving feature correlation sequence and the influence value of each of features in the vehicle driving feature vector on the central region response includes: ${Δh}_{i} = TA 1 ⋅ \frac{{Wr}_{i} ⋅ {f 1}_{i}}{{\sum }_{k = 1}^{N 1} {Wr}_{i} ⋅ {f 1}_{i}} + TA 2 ⋅ {\sum }_{j = 1}^{N 2} \frac{{Wf}_{j} ⋅ {f 2}_{j}}{{\sum }_{j = 1}^{N 2} {Wf}_{j} ⋅ {f 2}_{j}} + TA 3 ⋅ \frac{{\sum }_{k = 1 , j \neq k}^{N 1} {Wr}_{i} ⋅ {K}_{kj} ⋅ {f 3}_{ik}}{{\sum }_{k = 1 , j \neq k}^{N 1} {Wr}_{i} ⋅ {f 3}_{ik}} ;$ ${f 1}_{i} = \frac{{\left(tanh\left(τ1⋅\left(N1-{R}_{i}+1\right)\right)+1\right)}^{δ 1}}{1 + {e}^{- τ 2 ⋅ \left(M-{R}_{i}+1\right)}} ;$ ${f 2}_{j} = \frac{{\left(ln\left(1+μ1⋅\left(N2-{Q}_{j}+1\right)\right)\right)}^{δ 2}}{1 + {e}^{- μ 2 ⋅ \left(P-{Q}_{j}+1\right)}} ;$ ${f 3}_{ik} = \frac{{\left(1+{e}^{- θ 1 ⋅ \left|{R}_{i}-{R}_{k}\right|}\right)}^{ε}}{1 + ta \left(θ2⋅\left|{R}_{i}-{R}_{k}\right|\right)} ;$

where, Δhᵢ represents a thickness adjustment value of an i-th sub-region in the first region, Wrᵢ represents a sub-region influence value of the i-th sub-region in the first region on the central region response, f1ᵢ represents a weight of the i-th sub-region in the first region, Wfⱼ represents a feature influence value of a j-th feature in the vehicle driving feature vector on the central region response, f2ⱼ represents a weight of the j-th feature in the vehicle driving feature vector, f3ᵢₖ represents an interactive influence weight of a k-th sub-region to the i-th sub-region in the first region, Kₖⱼ represents an interactive influence value of the k-th sub-region and the i-th sub-region in the first region on the central region response, TA1 represents a sub-region thickness adjustment value, TA2 represents a feature thickness adjustment value, TA3 represents an interactive thickness adjustment value, Rᵢ represents an order value of the i-th sub-region in the first region in a sub-region correlation sequence R, Qⱼ represents an order value of the j-th feature in the vehicle driving feature vector in a driving feature correlation sequence Q, N2 represents a number of features in the vehicle driving feature vector, τ1 represents a sub-region growth factor, τ2 represents a sub-region attenuation factor, µ1 represents a feature growth factor, µ2 represents a feature attenuation factor, θ1 represents an interactive growth factor, θ2 represents an interactive attenuation factor, δ1 represents a sub-region power adjustment factor, δ2 represents a feature power adjustment factor, and ε represents an interactive power adjustment factor.

According to the tire design method for enhancing tire center region responsiveness via optimized tire sidewall thickness, determining the tire sidewall optimized thickness matrix based on thickness adjustment values of all the sub-regions in the first region and the tire sidewall reference thickness matrix includes: $M = \left(\begin{matrix}{A}_{1} & … & {A}_{i} & … & {A}_{N 1} \\ {hb}_{1} + {Δh}_{1} & … & {hb}_{i} + {Δh}_{i} & … & {hb}_{N 1} + {Δh}_{N 1}\end{matrix}\right) ;$ where, M represents the tire sidewall optimized thickness matrix, A₁, Aᵢ , A_{N1} respectively represents a first sub-region, an *i*-th sub-region and an *N1*-th sub-region in the first region, N1 represents a number of sub-regions in the first region, hb₁, hbᵢ, hb_{N1} respectively represents tire sidewall reference thicknesses of the first sub-region, the i-th sub-region and the *N1*-th sub-region in the first region, and Δh₁, Δhᵢ, Δh_{N1} respectively represents thickness adjustment values of the first sub-region, the *i*-th sub-region and the *N1*-th sub-region in the first region.

According to the tire design method for enhancing tire center region responsiveness via optimized tire sidewall thickness, determining a tire design scheme based on the tire sidewall optimized thickness matrix of the target vehicle tire includes:
judging whether the tire sidewall optimized thickness matrix meets a tire center region response target, and if not, adjusting the tire sidewall optimized thickness matrix again until the tire center region response target is met; and
determining the tire design scheme based on a tire sidewall optimized thickness matrix of meeting the tire center region response target.

Compared with the prior art, the disclosure has the following beneficial effects.

By determining the vehicle driving feature vector and the tire sidewall reference thickness matrix of the target vehicle, the tire sidewall force data, the tire center response data, the vehicle driving feature vector and the tire sidewall reference thickness matrix are analyzed to determine the tire sidewall optimized thickness matrix of the target vehicle tire and determine the tire design scheme. The structure and performance of the tire are optimized, the durability and safety of the tire are improved, the fine tire thickness adjustment is realized, the matching degree and dynamic performance of the tire and the vehicle are improved, and the adaptability, quality consistency and use security of the tire are improved.

### BRIEF DESCRIPTION OF THE DRAWINGS

In order to explain the technical scheme of the disclosure or the prior art more clearly, the drawings needed to be used in the description of the embodiments or the prior art will be briefly introduced below. Obviously, the drawings in the following description are some embodiments of the disclosure, and other drawings may be obtained according to these drawings without creative efforts for ordinary skilled in the field.

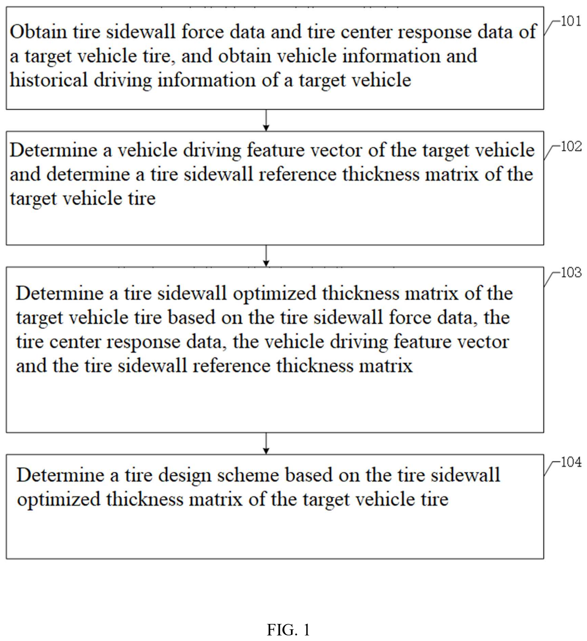

FIG. 1 is a schematic flow diagram of a tire design method for enhancing tire center region responsiveness via optimized tire sidewall thickness according to embodiments of the disclosure.

### DETAILED DESCRIPTION OF THE EMBODIMENTS

In order to make the purpose, technical scheme and advantages of the disclosure more clear, the technical scheme in the disclosure will be described clearly and completely with reference to the attached drawings in the disclosure. Obviously, the described embodiments are part of the embodiments of the disclosure, but not all of embodiments. Based on the embodiments in the disclosure, all other embodiments obtained by ordinary skilled in the field without creative efforts belong to the scope of protection of the disclosure.

### Embodiment 1

A tire design method for enhancing tire center region responsiveness via optimized tire sidewall thickness is provided in this embodiment, as shown in FIG. 1, and includes:
S101, tire sidewall force data and tire center response data of a target vehicle tire are obtained, and vehicle information and historical driving information of a target vehicle are obtained;
S102, a vehicle driving feature vector of the target vehicle is determined and a tire sidewall reference thickness matrix of the target vehicle tire is determined;
S103, a tire sidewall optimized thickness matrix of the target vehicle tire is determined based on the tire sidewall force data, the tire center response data, the vehicle driving feature vector and the tire sidewall reference thickness matrix; and
S104, a tire design scheme is determined based on the tire sidewall optimized thickness matrix of the target vehicle tire.

In this embodiment, based on the reference thickness, combined with the force data, tire center response data and vehicle driving features, the thickness of each sub-region of the tire sidewall is optimized, and finally a tire sidewall optimized thickness matrix is formed.

In this embodiment, the tire design scheme is an integral tire design description formed based on the tire sidewall optimization thickness matrix and other design parameters.

In this embodiment, the optimized tire sidewall thickness matrix is combined with other tire design parameters (such as tire tread design and material selection) to form a complete tire design scheme, which not only meets the central region response target, but also adapts to the driving characteristics and actual use requirements of the target vehicle.

The technical scheme has the following beneficial effects: by determining the vehicle driving feature vector and the tire sidewall reference thickness matrix of the target vehicle, the tire sidewall force data, the tire center response data, the vehicle driving feature vector and the tire sidewall reference thickness matrix are analyzed to determine the tire sidewall optimized thickness matrix of the target vehicle tire and determine the tire design scheme. The structure and performance of the tire are optimized, the durability and safety of the tire are improved, the fine tire thickness adjustment is realized, the matching degree and dynamic performance of the tire and the vehicle are improved, and the adaptability, quality consistency and use security of the tire are improved.

### Embodiment 2

According to the tire design method for enhancing tire center region responsiveness via optimized tire sidewall thickness in this embodiment, obtaining tire sidewall force data and tire center response data of a target vehicle tire, and obtaining vehicle information and historical driving information of a target vehicle includes:
the vehicle information of the target vehicle is obtained, where the vehicle information includes vehicle type and vehicle purpose;
historical driving information of the target vehicle is obtained, where the historical driving information includes historical road surface information and historical driving demand;
the target vehicle tire is divided into regions and a first region of the target vehicle tire is determined, where the first region includes a plurality of sub-regions;
tire sidewall force sub-data and tire center response sub-data of each of the sub-regions in the first region are obtained;
the tire sidewall stress data is determined based on tire sidewall stress sub-data of all of the sub-regions in the first region, and the tire center response data is determined based on tire center response sub-data of all of the sub-regions in the first region.

In this embodiment, the vehicle type refers to the specific species of the vehicles, such as cars, SUVs, trucks, etc., and the performance requirements of different types of vehicles for tires are quite different.

In this embodiment, the vehicle purpose refers to the functional purpose of the vehicle, such as home, business, off-road or freight transportation. The purpose determines the focus of tire design (such as comfort, durability or load capacity).

In this embodiment, the historical road surface information refers to the types of road surfaces (such as expressways, urban roads, dirt roads or gravel roads) that vehicles often run on, and reflects the requirements of the road surfaces for tire wear, impact and adaptability.

In this embodiment, the historical driving demand refers to the typical use mode of the vehicle (such as frequent braking, long-term high-speed driving or short-distance multifrequency start-stop), which is used to evaluate how the tire design should adapt to these demands.

In this embodiment, the tire is divided into several regions for more accurate analysis and optimization of different regions.

In this embodiment, the tire sidewall force characteristics of the sub-region are collected in a distributed manner, including external force, internal stress, shear force and the like.

In this embodiment, the tire center response sub-data represents the response data of the sub-region to external instructions, including dynamic response capability and feedback characteristics, for evaluating its sensitivity and adaptability.

In this embodiment, the tire sidewall force sub-data of all sub-regions in the first region are integrated to form an integral tire sidewall force data, which reflects the comprehensive state of tire sidewall bearing capacity.

In this embodiment, the tire center response sub-data of all sub-regions in the first region are integrated to form the integral tire center response data.

The technical scheme has the following beneficial effects: determining tire sidewall force data, tire center response data, vehicle information and historical driving information may provide data basis for determining vehicle driving feature vector and tire sidewall reference thickness matrix, and improve adaptability and comprehensive performance of the tire.

### Embodiment 3

According to the tire design method for enhancing tire center region responsiveness via optimized tire sidewall thickness in this embodiment, determining a vehicle driving feature vector of the target vehicle includes:
feature extraction is performed on the vehicle information to determine a vehicle feature vector, and feature extraction is performed on the historical driving demand to determine a driving feature vector;
the vehicle driving feature vector of the target vehicle is determined based on the vehicle feature vector and the driving feature vector.

In this embodiment, the vehicle feature vector is a set of quantitative parameters extracted from the vehicle information, which is used to represent the basic characteristics and dynamic performance of the vehicle, and may include vehicle mass distribution characteristics, such as the whole mass, axle load distribution, center of gravity position, etc. Characteristics of suspension system: including suspension stiffness and damping characteristics. Characteristics of steering system: steering angle range, steering response speed, etc. Driving mode: such as front drive, rear drive or four-wheel drive, etc. Through the extraction of these feature parameters, a high-dimensional vector, that is, the vehicle feature vector, is formed.

In this embodiment, the driving feature vector is a parameter set extracted according to the historical driving demand of the vehicle, which is used to quantify the actual running environment and usage habits of the vehicle. The content of feature extraction may include the characteristics of driving road conditions: the proportion of different roads (such as highways, urban roads, gravel roads, etc.); speed distribution characteristics: the running time distribution of vehicles in different speed intervals; braking and acceleration characteristics: including the number and frequency of frequent braking and rapid acceleration; steering characteristics: vehicle steering times, angle change range, etc. These data are processed to form the driving feature vector of the vehicle.

In this embodiment, the vehicle feature vector and the driving feature vector are fused, and a vehicle driving feature vector is generated by an algorithm (such as weighted average, cluster analysis, etc.), which comprehensively reflects the inherent dynamic performance of the vehicle and the characteristics of the actual operating environment.

The technical scheme has the following beneficial effects: determining the vehicle driving feature vector of the target vehicle may provide data basis for determining the tire sidewall optimized thickness matrix of the target vehicle tire, and improve the matching degree and dynamic performance of the tire and the vehicle.

### Embodiment 4

According to the tire design method for enhancing tire center region responsiveness via optimized tire sidewall thickness in this embodiment, determining a tire sidewall reference thickness matrix of the target vehicle tire includes:
vehicle tire sidewall thickness information of a plurality of production batches of the target vehicle is obtained, where the vehicle tire sidewall thickness information includes vehicle tire sidewall thickness sub-information of each of the production batches;
a tire sidewall reference thickness of each of the sub-regions in the first region is determined based on the first region and the vehicle tire sidewall thickness information;
the sidewall reference thickness matrix of the target vehicle tire is determined based on all of the sub-regions in the first region and sidewall reference thicknesses of all of the sub-regions.

In this embodiment, different production batches of tires may have slight differences in tire sidewall thickness due to process, material or manufacturing errors, and information related to tire sidewall thickness is collected for multiple production batches of the target vehicle.

In this embodiment, the tire sidewall thickness sub-information represents the specific measured value of the tire sidewall thickness of each sub-region in the first region in the corresponding production batch.

In this embodiment, a tire sidewall reference thickness is calculated based on the thickness data of all production batches in each sub-region, and statistical methods (such as weighted average, standardization, etc.) are usually used to represent the standard thickness of this region.

In this embodiment, the tire sidewall reference thickness matrix is a 2×N1 matrix.

In this embodiment, the reference thickness matrix completely and systematically represents the thickness distribution characteristics of the tire sidewall of the target vehicle.

The technical scheme has the following beneficial effects: determining the tire sidewall reference thickness matrix of the target vehicle tire may provide data basis for determining the tire sidewall optimized thickness matrix of the target vehicle tire, and improve the consistency of tire quality and use safety.

### Embodiment 5

According to the tire design method for enhancing tire center region responsiveness via optimized tire sidewall thickness in this embodiment, determining a tire sidewall optimized thickness matrix of the target vehicle tire based on the tire sidewall force data, the tire center response data, the vehicle driving feature vector and the tire sidewall reference thickness matrix includes:
a regional force vector of corresponding to each of the sub-regions in the first region is determined base on each of tire sidewall force sub-data in the tire sidewall force data;
a sub-center response vector of corresponding to each of the sub-regions in the first region is determined base on each of tire center response sub-data in the tire center response data, and a central response vector of the first region is determined base on all the tire center response sub-data in the tire center response data;
regional force vectors, sub-center response vectors of all the sub-regions in the first region and the central response vector of the first region are input into a tire sidewall force-central region response correlation model, and a sub-region correlation sequence and an influence value of each of the sub-regions in the first region on central region response are determined based on output results of the tire sidewall force-central region response correlation model;
the vehicle driving feature vector, the sub-central response vectors of all the sub-regions in the first region and the central response vector of the first region are input into a vehicle driving-central region response correlation model, and a driving feature correlation sequence and an influence value of each of features in the vehicle driving feature vector on the central region response are determined based on the vehicle driving-central region response correlation model;
a thickness adjustment value of each of the sub-regions in the tire sidewall reference thickness matrix is determined based on the sub-region correlation sequence, the influence value of each of the sub-regions in the first region on central region response, the driving feature correlation sequence and the influence value of each of features in the vehicle driving feature vector on the central region response;
the tire sidewall optimized thickness matrix is determined based on thickness adjustment values of all the sub-regions in the first region and the tire sidewall reference thickness matrix.

In this embodiment, the regional force vector represents the force distribution characteristics in this sub-region and reflects the force situation of the tire sidewall in actual use.

In this embodiment, the sub-center response vector reflects the response data of the influence of the sub-region on the overall performance of the tire.

In this embodiment, the central response vector obtains the overall response vector of the whole first region by summarizing and analyzing the tire central response sub-data of all sub-regions, which represents the overall performance response of this region.

In this embodiment, by inputting the regional force vector, sub-center response vector and central response vector into the tire sidewall force-center response correlation model, output results of the model include: sub-region correlation sequence, representing the relative importance of different sub-regions in the response; the influence value of each sub-region on the central region response, revealing the contribution of the force of each sub-region to the whole tire performance.

In this embodiment, the vehicle driving feature vector, the sub-center response vector and the central response vector are input into the vehicle driving-center response correlation model, and output results of the model include: the driving feature correlation sequence, representing the relative influence of each driving feature on the center response; the influence value of each feature on the central region response, revealing the contribution of each driving feature to the tire performance response under specific driving conditions.

In this embodiment, the thickness adjustment value of each sub-region is determined by combining the sub-region correlation sequence, the influence value of the sub-region on the central region response, the driving feature correlation sequence and the influence value of the driving feature on the central region response. Based on these adjustment values, and combined with tire sidewall reference thickness matrix, the tire sidewall optimized thickness matrix is obtained.

The technical scheme has the following beneficial effects: the tire sidewall optimized thickness matrix of the target vehicle tire is determined based on the tire sidewall force data, tire central response data, vehicle driving feature vector and tire sidewall reference thickness, so that structure and performance of the tire may be optimized, the overall performance of the tire may be improved, the durability and safety of the tire may be improved, and fine tire thickness adjustment may be realized.

### Embodiment 6

According to the tire design method for enhancing tire center region responsiveness via optimized tire sidewall thickness in this embodiment, determining a thickness adjustment value of each of the sub-regions in the tire sidewall reference thickness matrix based on the sub-region correlation sequence, the influence value of each of the sub-regions in the first region on central region response, the driving feature correlation sequence and the influence value of each of features in the vehicle driving feature vector on the central region response includes:${Δh}_{i} = TA 1 ⋅ \frac{{Wr}_{i} ⋅ {f 1}_{i}}{{\sum }_{k = 1}^{N 1} {Wr}_{i} ⋅ {f 1}_{i}} + TA 2 ⋅ {\sum }_{j = 1}^{N 2} \frac{{Wf}_{j} ⋅ {f 2}_{j}}{{\sum }_{j = 1}^{N 2} {Wf}_{j} ⋅ {f 2}_{j}} + TA 3 ⋅ \frac{{\sum }_{k = 1 , j \neq k}^{N 1} {Wr}_{i} ⋅ {K}_{kj} ⋅ {f 3}_{ik}}{{\sum }_{k = 1 , j \neq k}^{N 1} {Wr}_{i} ⋅ {f 3}_{ik}} ;$ ${f 1}_{i} = \frac{{\left(tanh\left(τ1⋅\left(N1-{R}_{i}+1\right)\right)+1\right)}^{δ 1}}{1 + {e}^{- τ 2 ⋅ \left(M-{R}_{i}+1\right)}} ;$ ${f 2}_{j} = \frac{{\left(ln\left(1+μ1⋅\left(N2-{Q}_{j}+1\right)\right)\right)}^{δ 2}}{1 + {e}^{- μ 2 ⋅ \left(P-{Q}_{j}+1\right)}} ;$ ${f 3}_{ik} = \frac{{\left(1+{e}^{- θ 1 ⋅ \left|{R}_{i}-{R}_{k}\right|}\right)}^{ε}}{1 + tan \left(θ2⋅\left|{R}_{i}-{R}_{k}\right|\right)} ;$ where, Δhᵢ represents a thickness adjustment value of an i-th sub-region in the first region, Wrᵢ represents a sub-region influence value of the i-th sub-region in the first region on the central region response, f1ᵢ represents a weight of the i-th sub-region in the first region, Wfⱼ represents a feature influence value of a j-th feature in the vehicle driving feature vector on the central region response, f2ⱼ represents a weight of the j-th feature in the vehicle driving feature vector, f3ᵢₖ represents an interactive influence weight of a k-th sub-region to the i-th sub-region in the first region, Kₖⱼ represents an interactive influence value of the *k*-th sub-region and the *i*-th sub-region in the first region on the central region response, TA1 represents a sub-region thickness adjustment value, TA2 represents a feature thickness adjustment value, TA3 represents an interactive thickness adjustment value, Rᵢ represents an order value of the i-th sub-region in the first region in a sub-region correlation sequence R, Qⱼ represents an order value of the *j*-th feature in the vehicle driving feature vector in a driving feature correlation sequence Q, N2 represents a number of features in the vehicle driving feature vector, τ1 represents a sub-region growth factor, τ2 represents a sub-region attenuation factor, µ1 represents a feature growth factor, µ2 represents a feature attenuation factor, θ1 represents an interactive growth factor, θ2 represents an interactive attenuation factor, δ1 represents a sub-region power adjustment factor, δ2 represents a feature power adjustment factor, and ε represents an interactive power adjustment factor.

In this embodiment, the sub-region growth factor τ1 controls the growth rate of the hyperbolic tangent function, and the sub-region attenuation factor τ2 controls the attenuation rate of the exponential function, respectively controlling the accelerated growth and attenuation rate of the sub-region correlation sequence to the weight.

In this embodiment, the feature growth factor µ1 controls the growth rate of the logarithmic function, and the feature attenuation factor µ2 controls the attenuation rate of the exponential decay function, respectively controlling the enhancement and weakening effects of the driving feature correlation sequence on the weights.

In this embodiment, the sub-region interaction factor controls the growth of the exponential decay function in f3ᵢₖ, and the sub-region interaction factor controls the decay rate of the hyperbolic tangent function in f3ᵢₖ, using to adjust the enhancement or weakening effect of the ordering difference on the interaction influence.

The technical scheme has the following beneficial effects: the thickness adjustment value of each sub-region in the tire sidewall reference thickness matrix is determined based on the sub-region correlation sequence, the influence value of each sub-region in the first region on the central region response, the driving feature correlation sequence and the influence value of each feature in the vehicle driving feature vector on the central region response, which may provide data basis for determining the tire sidewall optimized thickness matrix and realize fine tire thickness adjustment.

### Embodiment 7

According to the tire design method for enhancing tire center region responsiveness via optimized tire sidewall thickness in this embodiment, determining the tire sidewall optimized thickness matrix based on thickness adjustment values of all the sub-regions in the first region and the tire sidewall reference thickness matrix includes:$M = \left(\begin{matrix}{A}_{1} & … & {A}_{i} & … & {A}_{N 1} \\ {hb}_{1} + {Δh}_{1} & … & {hb}_{i} + {Δh}_{i} & … & {hb}_{N 1} + {Δh}_{N 1}\end{matrix}\right) ;$

where, M represents the tire sidewall optimized thickness matrix, A₁, Aᵢ , A_{N1} respectively represents a first sub-region, an *i*-th sub-region and an *N1*-th sub-region in the first region, N1 represents a number of sub-regions in the first region, hb₁, hbᵢ, hb_{N1} respectively represents tire sidewall reference thicknesses of the first sub-region, the *i*-th sub-region and the *N1*-th sub-region in the first region, and Δh₁, Δhᵢ, Δh_{N1} respectively represents thickness adjustment values of the first sub-region, the *i*-th sub-region and the *N1*-th sub-region in the first region.

In this embodiment, hb₁ + Δh₁, hb₁ + Δh₁, hb_{N1} + Δh_{N1} respectively represents the optimized thickness values of the first sub-region, the *i*-th sub-region and the *N1*-th sub-region in the first region.

The technical scheme has the following beneficial effects: the tire sidewall optimized thickness matrix is determined based on the thickness adjustment values of all sub-regions in the first region and the tire sidewall reference thickness matrix, which may provide data basis for determining the tire design scheme, optimize the structure and performance of the tire, improve the overall performance of the tire, and improve the durability and safety of the tire.

### Embodiment 8

According to the tire design method for enhancing tire center region responsiveness via optimized tire sidewall thickness in this embodiment, determining a tire design scheme based on the tire sidewall optimized thickness matrix of the target vehicle tire includes:
whether the tire sidewall optimized thickness matrix meets a tire center region response target is judged, and if not, the tire sidewall optimized thickness matrix is adjusted again until the tire center region response target is met;
the tire design scheme is determined based on a tire sidewall optimized thickness matrix of meeting the tire center region response target.

In this embodiment, the tire sidewall optimized thickness matrix is the optimization result obtained by analyzing the tire sidewall force data, response data and vehicle driving features. However, whether this matrix may reach the preset tire center response target needs to be verified. The tire center response target refers to the performance indicators (such as stiffness, stability, deformation characteristics, etc.) that the tire needs to achieve under specific design conditions. By inputting the tire sidewall optimized thickness matrix into the corresponding performance simulation model or test environment, the tire center response corresponding to the matrix is calculated, and compared with the preset target value to judge whether it meets the design requirements. If not, the tire sidewall optimized thickness matrix is adjusted again, and the thickness value of each sub-region is re-optimized until the output performance of the optimized matrix is consistent with the preset target value.

In this embodiment, when the tire sidewall optimized thickness matrix is adjusted and the output performance reaches the preset tire center response target, the matrix may be regarded as the final optimization result meeting the performance requirements.

In this embodiment, the tire sidewall optimized thickness matrix that finally meets the requirements is taken as the core parameter of the design, and the overall tire design scheme is determined in combination with other tire structure designs (such as tire tread thickness, pattern design, etc.).

The technical scheme has the following beneficial effects: the tire design scheme is determined based on the tire sidewall optimized thickness matrix of the target vehicle tire, which may improve the precision design level of the tire, ensure the key performance of the tire such as rigidity and stability, and improve the flexibility and adaptability of the design.

The device embodiments described above are only schematic, in which the units described as separate components may or may not be physically separated, and the components displayed as units may or may not be physical units, that is, the components may be located in one place or distributed to multiple network units. Some or all of the modules may be selected according to actual needs to achieve the purpose of this embodiment. Ordinary skilled in this field may understand and implement it without creative efforts.

From the description of the above embodiments, those skilled in the art may clearly understand that each embodiment may be realized by means of software and necessary general hardware platform, and of course it may also be realized by hardware. Based on this understanding, the essence of the above technical scheme or the part that has contributed to the prior art may be embodied in the form of a software product, the software product may be stored in a computer-readable storage medium, such as ROM/RAM, magnetic disk, optical disk, etc., and includes several instructions for making a computer device (which may be a personal computer, a server, or a network device, etc.) execute the methods described in various embodiments or some parts of the embodiments.

Finally, it should be explained that the above embodiments are only used to illustrate the technical scheme of the disclosure, but not to limit it. Although the disclosure has been described in detail with reference to the foregoing embodiments, those skilled in the art should understand that it is still possible to modify the technical scheme described in the foregoing embodiments, or to replace some technical features with equivalents. However, these modifications or substitutions may not make the essence of the corresponding technical solutions deviate from the spirit and scope of the technical solutions of various embodiments of the disclosure.

## Claims

1. A tire design method for enhancing tire center region responsiveness via optimized tire sidewall thickness, comprising:
S101, obtaining tire sidewall force data and tire center response data of a target vehicle tire, and obtaining vehicle information and historical driving information of a target vehicle;
S102, determining a vehicle driving feature vector of the target vehicle and determining a tire sidewall reference thickness matrix of the target vehicle tire;
S103, determining a tire sidewall optimized thickness matrix of the target vehicle tire based on the tire sidewall force data, the tire center response data, the vehicle driving feature vector and the tire sidewall reference thickness matrix; and
S104, determining a tire design scheme based on the tire sidewall optimized thickness matrix of the target vehicle tire;
wherein, S103 comprises:
dividing the target vehicle tire into regions and determining a first region of the target vehicle tire, wherein the first region comprises a plurality of sub-regions;
determining a regional force vector of corresponding to each of the sub-regions in the first region base on each of tire sidewall force sub-data in the tire sidewall force data;
determining a sub-center response vector of corresponding to each of the sub-regions in the first region base on each of tire center response sub-data in the tire center response data, and determining a central response vector of the first region base on all the tire center response sub-data in the tire center response data;
inputting regional force vectors, sub-center response vectors of all the sub-regions in the first region and the central response vector of the first region into a tire sidewall force-central region response correlation model, and determining a sub-region correlation sequence and an influence value of each of the sub-regions in the first region on central region response based on output results of the tire sidewall force-central region response correlation model;
inputting the vehicle driving feature vector, the sub-center response vectors of all the sub-regions in the first region and the central response vector of the first region into a vehicle driving-central region response correlation model, and determining a driving feature correlation sequence and an influence value of each of features in the vehicle driving feature vector on the central region response based on the vehicle driving-central region response correlation model;
determining a thickness adjustment value of each of the sub-regions in the tire sidewall reference thickness matrix based on the sub-region correlation sequence, the influence value of each of the sub-regions in the first region on central region response, the driving feature correlation sequence and the influence value of each of features in the vehicle driving feature vector on the central region response; and
determining the tire sidewall optimized thickness matrix based on thickness adjustment values of all the sub-regions in the first region and the tire sidewall reference thickness matrix.

2. The tire design method for enhancing tire center region responsiveness via optimized tire sidewall thickness according to claim 1, wherein obtaining tire sidewall force data and tire center response data of a target vehicle tire, and obtaining vehicle information and historical driving information of a target vehicle comprises:
obtaining the vehicle information of the target vehicle, wherein the vehicle information comprises vehicle type and vehicle purpose;
obtaining historical driving information of the target vehicle, wherein the historical driving information comprises historical road surface information and historical driving demand;
obtaining tire sidewall force sub-data and tire center response sub-data of each of the sub-regions in the first region; and
determining the tire sidewall stress data based on tire sidewall stress sub-data of all of the sub-regions in the first region, and determining the tire center response data based on tire center response sub-data of all of the sub-regions in the first region.

3. The tire design method for enhancing tire center region responsiveness via optimized tire sidewall thickness according to claim 1, wherein determining a vehicle driving feature vector of the target vehicle comprises:
performing feature extraction on the vehicle information to determine a vehicle feature vector, and performing feature extraction on the historical driving demand to determine a driving feature vector; and
determining the vehicle driving feature vector of the target vehicle based on the vehicle feature vector and the driving feature vector.

4. The tire design method for enhancing tire center region responsiveness via optimized tire sidewall thickness according to claim 2, wherein determining a tire sidewall reference thickness matrix of the target vehicle tire comprises:
obtaining vehicle tire sidewall thickness information of a plurality of production batches of the target vehicle, wherein the vehicle tire sidewall thickness information comprises vehicle tire sidewall thickness sub-information of each of the production batches;
determining a tire sidewall reference thickness of each of the sub-regions in the first region based on the first region and the vehicle tire sidewall thickness information; and
determining the sidewall reference thickness matrix of the target vehicle tire based on all of the sub-regions in the first region and sidewall reference thicknesses of all of the sub-regions.

5. The tire design method for enhancing tire center region responsiveness via optimized tire sidewall thickness according to claim 1, wherein determining a thickness adjustment value of each of the sub-regions in the tire sidewall reference thickness matrix based on the sub-region correlation sequence, the influence value of each of the sub-regions in the first region on central region response, the driving feature correlation sequence and the influence value of each of features in the vehicle driving feature vector on the central region response comprises: ${Δh}_{i} = TA 1 ⋅ \frac{{Wr}_{i} ⋅ {f 1}_{i}}{{\sum }_{k = 1}^{N 1} {Wr}_{i} ⋅ {f 1}_{i}} + TA 2 ⋅ {\sum }_{j = 1}^{N 2} \frac{{Wf}_{j} ⋅ {f 2}_{j}}{{\sum }_{k = 1}^{N 2} {Wf}_{j} ⋅ {f 2}_{j}} + TA 3 ⋅ \frac{{\sum }_{k = 1 , j \neq k}^{N 1} {Wr}_{i} ⋅ {K}_{kj} ⋅ {f 3}_{ik}}{{\sum }_{k = 1 , j \neq k}^{N 1} {Wr}_{i} ⋅ {f 3}_{ik}} ;$ ${f 1}_{i} = \frac{{\left(tanh\left(τ1⋅\left(N1-{R}_{i}+1\right)\right)+1\right)}^{δ 1}}{1 + {e}^{- τ 2 ⋅ \left(M-{R}_{i}+1\right)}} ;$ ${f 2}_{j} = \frac{{\left(ln\left(1+μ1⋅\left(N2-{Q}_{j}+1\right)\right)\right)}^{δ 2}}{1 + {e}^{- μ 2 ⋅ \left(P-{Q}_{j}+1\right)}} ;$ ${f 3}_{ik} = \frac{{\left(1+{e}^{- {θ}_{1} ⋅ \left|{R}_{i}-{R}_{k}\right|}\right)}^{ε}}{1 + tanh \left(θ2⋅\left|{R}_{i}-{R}_{k}\right|\right)} ;$
wherein, Δhᵢ represents a thickness adjustment value of an *i*-th sub-region in the first region, Wrᵢ represents a sub-region influence value of the *i*-th sub-region in the first region on the central region response, f1ᵢ represents a weight of the *i*-th sub-region in the first region, Wfⱼ represents a feature influence value of a *j*-th feature in the vehicle driving feature vector on the central region response, f2ⱼ represents a weight of the *j*-th feature in the vehicle driving feature vector, f3ᵢₖ represents an interactive influence weight of a *k*-th sub-region to the *i*-th sub-region in the first region, Kₖⱼ represents an interactive influence value of the *k*-th sub-region and the *i*-th sub-region in the first region on the central region response, TA1 represents a sub-region thickness adjustment value, TA2 represents a feature thickness adjustment value, TA3 represents an interactive thickness adjustment value, Rᵢ represents an order value of the *i*-th sub-region in the first region in a sub-region correlation sequence R, Qⱼ represents an order value of the *j*-th feature in the vehicle driving feature vector in a driving feature correlation sequence Q, N2 represents a number of features in the vehicle driving feature vector, τ1 represents a sub-region growth factor, τ2 represents a sub-region attenuation factor, µ1 represents a feature growth factor, µ2 represents a feature attenuation factor, θ1 represents an interactive growth factor, θ2 represents an interactive attenuation factor, δ1 represents a sub-region power adjustment factor, δ2 represents a feature power adjustment factor, and ε represents an interactive power adjustment factor.

6. The tire design method for enhancing tire center region responsiveness via optimized tire sidewall thickness according to claim 1, wherein determining the tire sidewall optimized thickness matrix based on thickness adjustment values of all the sub-regions in the first region and the tire sidewall reference thickness matrix comprises: $M = \left(\begin{matrix}{A}_{1} & … & {A}_{i} & … & {A}_{N 1} \\ {hb}_{1} + {Δh}_{1} & … & {hb}_{i} + {Δh}_{i} & … & {hb}_{N 1} + {Δh}_{N 1}\end{matrix}\right) ;$
wherein, M represents the tire sidewall optimized thickness matrix, A₁, Aᵢ, A_{N1} respectively represents a first sub-region, an *i*-th sub-region and an *N1*-th sub-region in the first region, N1 represents a number of sub-regions in the first region, hb₁, hbᵢ, hb_{N1} respectively represents tire sidewall reference thicknesses of the first sub-region, the i-th sub-region and the *N1*-th sub-region in the first region, and Δh₁, Δhᵢ, Δh_{N1} respectively represents thickness adjustment values of the first sub-region, the *i*-th sub-region and the *N1*-th sub-region in the first region.

7. The tire design method for enhancing tire center region responsiveness via optimized tire sidewall thickness according to claim 1, wherein determining a tire design scheme based on the tire sidewall optimized thickness matrix of the target vehicle tire comprises:
judging whether the tire sidewall optimized thickness matrix meets a tire center region response target, and if not, adjusting the tire sidewall optimized thickness matrix again until the tire center region response target is met; and
determining the tire design scheme based on a tire sidewall optimized thickness matrix of meeting the tire center region response target.
